# FASCICULE DE BREVET EUROPEEN

(11) **EP 2 989 314 B1**
(45) Date de publication et mention de la délivrance du brevet: **08.03.2017**
(21) Numéro de dépôt: 14725212.6
(22) Date de dépôt: 22.04.2014
(51) Int. Cl.: F02K 9/80, F02K 9/84, F02K 9/56

(54) **SYSTÈME DE MOTEUR-FUSÉE ORIENTABLE**
AUSRICHTBARES RAKETENMOTORSYSTEM
ORIENTABLE ROCKET-MOTOR SYSTEM

(30) Priorité: 23.04.2013 FR 1353684
(43) Date de publication de la demande: 02.03.2016
(73) Titulaire: Airbus Safran Launchers SAS, 75015 Paris (FR)
(72) Inventeur: RUFFINO Fabrice, F-78510 Triel sur Seine (FR); FAURE Benjamin, F-33110 Le Bouscat (FR)
(74) Mandataire: Gevers & Orès
(86) Numéro de dépôt international: PCT/FR2014/000089
(87) Numéro de publication internationale: WO 2014/174163

(56) Documents cités:
- DE-B- 1 301 649
- FR-A1- 2 952 034
- JP-A- H0 769 300
- JP-A- H09 240 599

## Description

La présente invention concerne un système de moteur-fusée orientable pour véhicule aérien.

Quoique non exclusivement, cette invention est particulièrement appropriée à être mise en oeuvre pour un avion spatial, c'est-à-dire un avion qui est équipé, à la fois, de moyens de propulsion aérobie, tels que des turbomoteurs, et de moyens de propulsion anaérobie, tels qu'un moteur-fusée, et qui est capable de décoller du sol de façon usuelle pour un avion, d'atteindre une altitude d'au moins cent kilomètres, de voler à une vitesse transsonique ou même supersonique, puis d'atterrir également de façon usuelle pour un avion.

On sait qu'un moteur-fusée comporte une chambre de combustion et une tuyère reliées par un col de tuyère et que, pour orienter en vol un véhicule aérien équipé d'un moteur-fusée, il est avantageux de commander en orientation ledit moteur-fusée. Pour ce faire, de façon connue, on articule, par exemple à la Cardan, l'extrémité de la chambre de combustion opposée au col de tuyère sur la structure du véhicule aérien et on prévoit des moyens d'actionnement, tels que des vérins, pour faire pivoter ledit moteur-fusée par rapport à cette extrémité articulée de la chambre de combustion.

Cette manière de faire présente l'inconvénient que, l'orifice d'éjection des gaz de la tuyère étant séparé de ladite extrémité articulée de la chambre de combustion par toute la longueur du moteur-fusée, le débattement dudit orifice d'éjection des gaz de la tuyère est transversalement important. Par suite, le capotage du véhicule aérien enveloppant le moteur-fusée doit présenter un grand diamètre pour permettre le débattement transversal de l'orifice d'éjection des gaz de la tuyère.

Il en résulte que ce grand capotage est source d'une traînée aérodynamique élevée nuisant aux performances dudit véhicule aérien.

La présente invention a pour objet de remédier à ces inconvénients.

À cette fin, selon l'invention, le système de moteur-fusée orientable pour véhicule aérien selon la revendication 1, ledit moteur-fusée comportant une chambre de combustion et une tuyère reliées par un col de ladite tuyère et ledit système permettant d'orienter ledit moteur-fusée par rapport à une position de référence définissant un axe de référence qui, lorsque ledit moteur-fusée est dans ladite position de référence, est orthogonal à l'orifice d'éjection des gaz de la tuyère et passe par le centre dudit orifice d'éjection des gaz, est remarquable en ce qu'il comporte des moyens de basculement :
- desquels ledit moteur-fusée est rendu solidaire par la partie de ladite tuyère voisine dudit col de tuyère et,
- qui sont aptes à faire basculer en sens opposés ladite tuyère et ladite chambre de combustion de façon que ledit moteur-fusée prenne, par rapport à ladite position de référence, des positions basculées dans lesquelles le centre dudit orifice d'éjection des gaz de la tuyère se trouve au moins approximativement sur ledit axe de référence.

Ainsi, grâce à la présente invention, le débattement transversal de l'orifice d'éjection de gaz de la tuyère est réduit, puisque son rayon de basculement est également réduit et que le centre dudit orifice reste au voisinage de l'axe de référence. Le capotage du moteur-fusée peut donc présenter un plus petit diamètre et n'engendrer qu'une plus faible traînée aérodynamique.

Dans un mode de réalisation avantageux, lesdits moyens de basculement comportent une structure de support creuse, de forme tronc-pyramidale :
- qui est déformable dans les deux sens d'une première direction de déformation, sous l'action de premiers moyens d'actionnement,
- qui porte ledit moteur-fusée par sa petite base, et
- à l'intérieur de laquelle est logée ladite chambre de combustion.

De préférence, ladite structure de support déformable creuse est formée par un treillis de barres articulées et lesdits premiers moyens d'actionnement sont des vérins articulés à au moins une barre articulée dudit treillis.

Pour permettre le basculement du moteur-fusée dans n'importe quelle orientation de l'espace, il est avantageux que lesdits moyens de basculement comportent de plus une structure de base creuse, de forme tronc-pyramidale :
- qui est montée par sa grande base sur ledit véhicule,
- qui est déformable dans les deux sens d'une seconde direction de déformation orthogonale à ladite première direction de déformation, sous l'action de seconds moyens d'actionnement, et
- qui porte ladite structure de support déformable creuse par sa petite base.

Comme pour la structure de support, la structure de base déformable creuse peut être formée par un treillis de barres articulées et lesdits seconds moyens d'actionnement peuvent être des vérins articulés à au moins une barre articulée de ce dernier treillis.

Les treillis articulés de ladite structure de base et de ladite structure de support sont avantageusement superposés pour former une ossature tronc-pyramidale creuse pour lesdits moyens de basculement. Ceux-ci peuvent comporter un cadre intermédiaire pour l'assemblage des treillis de ladite structure de base et de ladite structure de support, cadre intermédiaire sur lequel :
- les barres de ladite structure de support sont articulées autour de premiers axes de rotation orthogonaux à ladite première direction de déformation, et
- les barres de ladite structure de base sont articulées autour de seconds axes de rotation orthogonaux à ladite seconde direction de déformation.

De préférence, lesdits premiers moyens d'actionnement pour la déformation de ladite structure de support prennent appui sur ledit cadre intermédiaire.

Lesdits moyens de basculement peuvent, de plus, comporter un cadre de base pour l'assemblage du treillis de ladite structure de base sur le véhicule aérien, les barres du treillis de ladite structure de base étant articulées sur ledit cadre de base autour de tels seconds axes de rotation orthogonaux à ladite seconde direction de déformation. En outre, il est avantageux que lesdits seconds moyens d'actionnement pour la déformation de ladite structure de base prennent appui sur ledit cadre de base.

Lesdits moyens de basculement peuvent comporter un plateau d'extrémité pour la fixation dudit moteur-fusée sur ladite structure de support, les barres de ladite structure de support étant articulées sur ledit plateau d'extrémité autour de tels axes de rotation orthogonaux à ladite première direction de déformation.

La présente invention concerne également un véhicule aérien, notamment un avion spatial, comportant un système de moteur-fusée orientable tel que spécifié ci-dessus.

Les figures du dessin annexée feront bien comprendre comment l'invention peut être réalisée. Sur ces figures, des références identiques désignent des éléments semblables.
La figure 1 montre, en perspective, un avion spatial équipé d'un moteur-fusée orientable conforme à la présente invention.
La figure 2 montre, également en perspective, les moyens de basculement du moteur-fusée conformes à la présente invention, ce moteur-fusée étant dans sa position de référence, neutre en orientation.
La figure 3 est une vue de dessus des moyens de basculement de la figure 2.
La figure 4 est une vue latérale de gauche des moyens de basculement de la figure 2.
La figure 5 est une vue latérale du dessous des moyens de basculement de la figure 2.
La figure 6 montre, par comparaison avec la figure 4, le basculement du moteur-fusée dans une première direction de déformation.
La figure 7 montre, par comparaison avec la figure 5, le basculement du moteur-fusée dans une seconde direction de déformation orthogonale à ladite première direction de déformation.
La figure 8 montre, en comparaison avec la figure 2, le basculement combiné du moteur-fusée résultant de basculements simultanés dans lesdites première et seconde directions orthogonales de déformation.

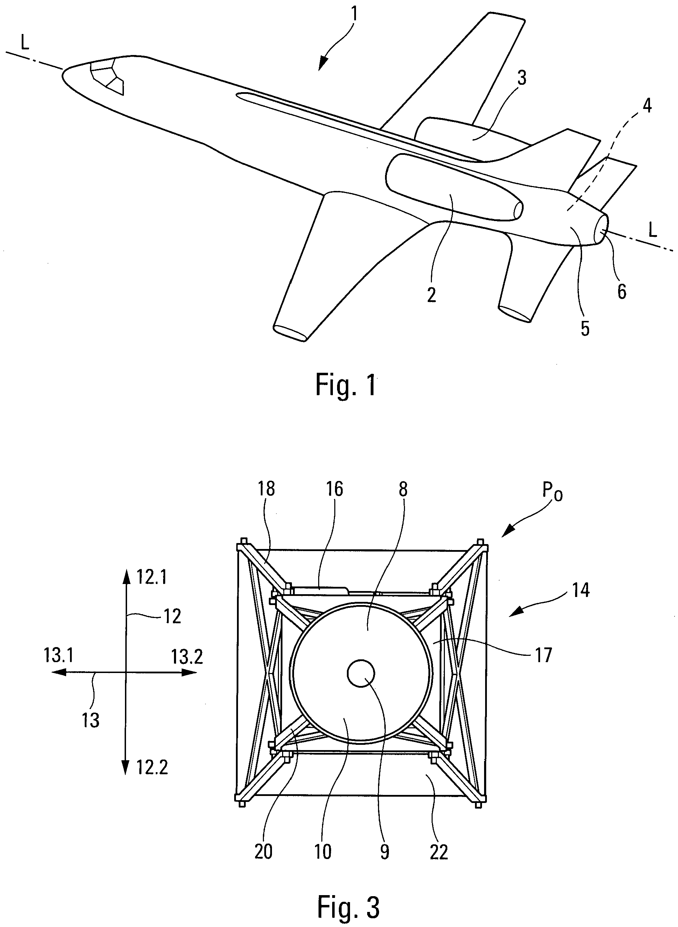

L'avion spatial 1, conforme à la présente invention et montré sur la figure 1, ne comporte qu'un seul étage et est apte à effectuer des vols transsoniques et/ou supersoniques.

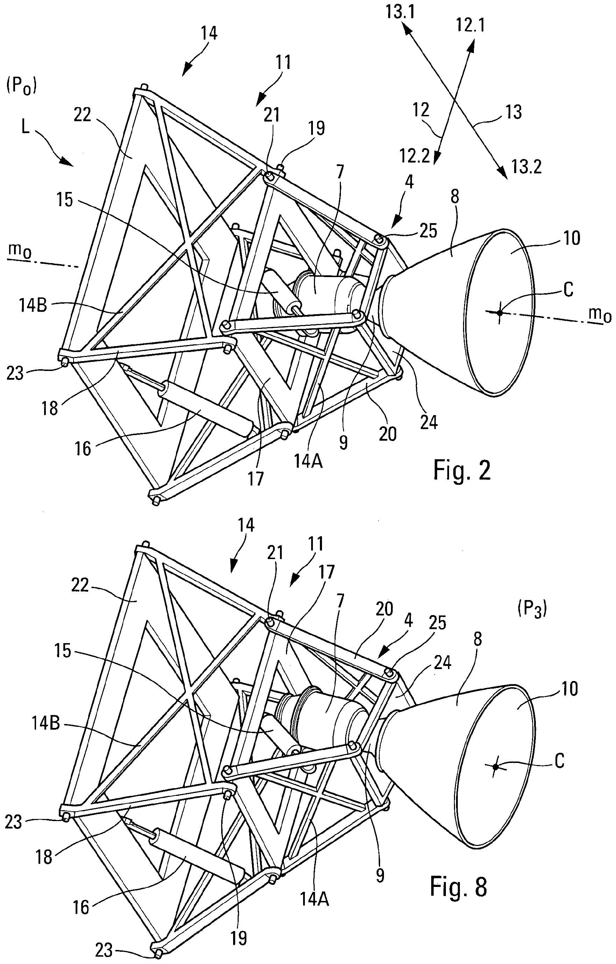

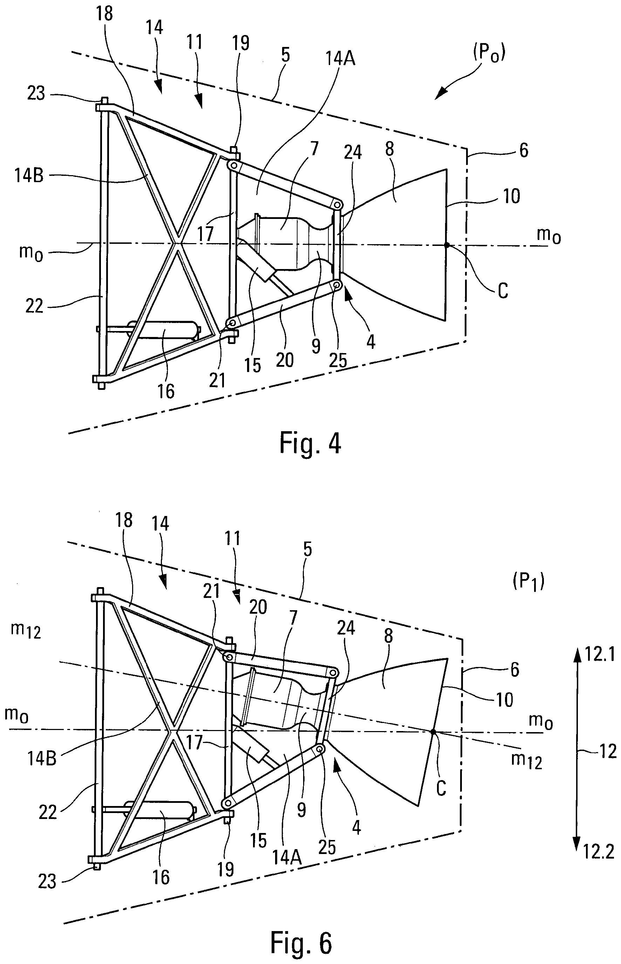

Cet avion spatial 1, d'axe longitudinal L-L, comporte deux turbomoteurs latéraux 2 et 3 et un moteur-fusée 4, disposé à l'arrière dudit avion spatial à l'intérieur d'un capotage de culot 5, pourvu d'un orifice 6 de sortie des gaz. Comme l'illustrent les figures 2 à 8, le moteur-fusée 4 comporte une chambre de combustion 7 et une tuyère 8 reliées par un col de tuyère 9. La tuyère 8 comporte un orifice d'éjection des gaz 10 disposé en regard de l'orifice de sortie 6 du capotage de culot 5 (représenté schématiquement en trait mixte sur les figures 4 à 7).

Le moteur-fusée 4 est monté (à l'intérieur du capotage de culot 5) sur des moyens de basculement 11 aptes à se déformer dans les deux sens 12.1 et 12.2 et 13.1 et 13.2 de chacune de deux directions de déformation orthogonales 12 et 13. Les moyens de basculement 11 comportent, d'une part, une ossature tronc-pyramidale 14 en treillis de barres articulées et, d'autre part, des vérins 15 et 16.

L'ossature tronc-pyramidale 14 comporte une structure tronc-pyramidale de support 14A portant le moteur-fusée 4 par sa petite base et une structure tronc-pyramidale de base 14B portant la structure tronc-pyramidale de support 14A par sa petite base. La grande base de la structure tronc-pyramidale 14A est reliée à la petite base de la structure tronc-pyramidale 14B grâce à un cadre intermédiaire 17, auquel les barres articulées 18 de la structure de base 14B sont articulées autour d'axes 19 orthogonaux à la direction de déformation 13 et les barres articulées 20 de la structure de support 14A sont articulées autour d'axes 21- orthogonaux à la direction de déformation 12.

L'ossature tronc-pyramidale 14 comporte de plus, du côté de la grande base de la structure 14B, un cadre de base 22 permettant de relier ladite ossature à la structure de l'avion spatial 1. Les barres articulées 18 de la structure de base 14B sont articulées au cadre de base 22 autour d'axes 23 orthogonaux à la direction de déformation 13. Le vérin 16 est articulé à la fois sur le cadre de base 22 sur lequel il prend appui et sur une barre articulée 18, de façon à pouvoir faire basculer la structure tronc-pyramidale 4B dans les deux sens 13.1 et 13.2 de la direction de déformation 13, par rotation autour des axes 19 et 23 orthogonaux à cette dernière direction de déformation.

Du côté de sa petite base opposée à la structure de base 14B, la structure de support 14A porte, de façon rigidement solidaire, le moteur-fusée 4. À cet effet, cette petite base est matérialisée par un plateau d'extrémité 24, duquel ledit moteur-fusée est rendu solidaire par la partie de la tuyère 8 voisine du col de tuyère 9, de sorte que la chambre de combustion 7 se trouve à l'intérieur de l'ossature 14. Les barres articulées 20 de la structure de support 14A sont articulées au plateau d'extrémité 24 autour d'axes 25 orthogonaux à ladite direction de déformation 12. Le vérin 15 est articulé à la fois sur le cadre intermédiaire 17 sur lequel il prend appui et sur une barre articulée 20, de façon à pouvoir faire basculer la structure tronc-pyramidale 4A dans les deux sens 12.1 et 12.2 de la direction de déformation 12 par rotation autour des axes 21 et 25 orthogonaux à cette dernière direction de basculement.

Ainsi, par commande des vérins 15 et 16, il est possible d'orienter le moteur-fusée 4 dans l'espace.

En position d'orientation neutre Pₒ servant de position de référence (voir les figures 2, 4 et 5), l'axe du moteur-fusée 4 occupe une position mₒ - mₒ qui est orthogonale à l'orifice d'éjection des gaz 10 de la tuyère 8 et passe par le centre C dudit orifice. Cette position mₒ - mₒ sert d'axe de référence par rapport auquel bascule le moteur fusée 4.

Comme l'illustre la figure 6, en s'allongeant ou en se raccourcissant, le vérin 15 déforme la structure de support tronc-pyramidale 14A dans l'un ou l'autre sens 12.1, 12.2 de la direction de déformation 12. De telles déformations de la structure de support 14A entraînent le basculement du plateau d'extrémité 24, de sorte que le moteur-fusée 4 prend des positions basculées P₁ dans les sens 12.1, 12.2 de la direction 12, dans lesquelles son axe prend des positions m₁₂ - m₁₂ inclinées par rapport à l'axe de référence mₒ - mₒ. Dans ces positions basculées P₁, la chambre de combustion 7 et la tuyère 8 basculent en sens inverses du fait que le moteur fixe 4 est rendu solidaire du plateau d'extrémité 24 par la partie de la tuyère 8 voisine du col de tuyère 9. Grâce à ce fait et à la constitution de la structure du support 14A, le centre C de l'orifice d'éjection des gaz de la tuyère 10 peut, dans ces positions P₁ basculées dans la direction de déformation 12, rester au voisinage de l'axe de référence mₒ - mₒ, si ce n'est sur celui-ci. Le débattement de la tuyère 10 dans la direction de déformation 12 peut donc être faible.

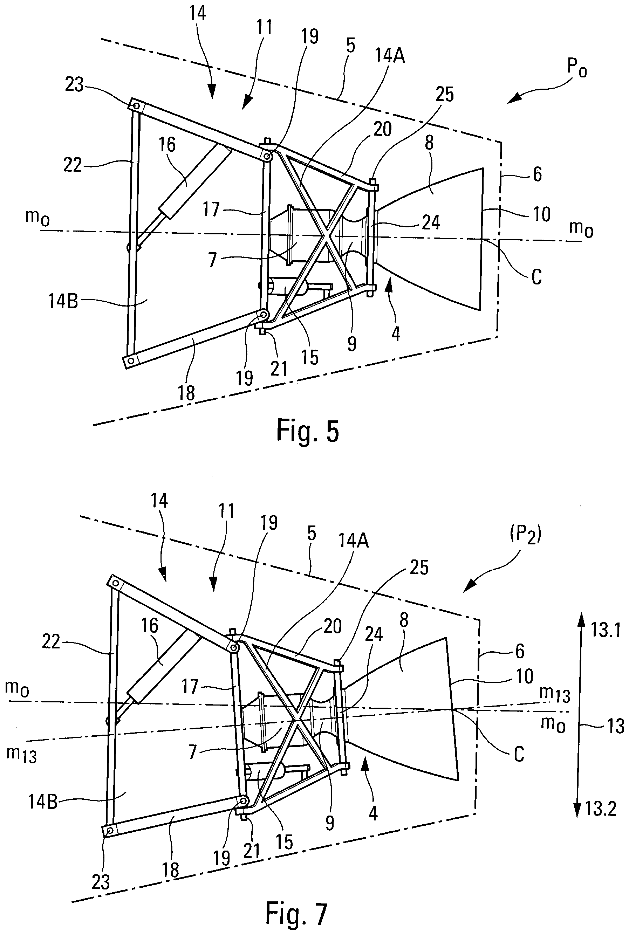

De façon analogue, comme l'illustre la figure 7, en s'allongeant ou en se raccourcissant, le vérin 16 déforme la structure de base tronc-pyramidale 14B dans l'un ou l'autre sens 13.1, 13.2 de la direction de déformation 13. De telles déformations de la structure de base 14B entraînent le basculement du plateau intermédiaire 17, de sorte que le moteur-fusée 4 prend des positions basculées P₂ dans le sens 13.1, 13.2 de la direction de déformation 13, dans lesquelles son axe prend des positions m₁₃ - m₁₃ inclinées par rapport à l'axe de référence mₒ - mₒ. Dans ces positions basculées P₂ , la chambre de combustion 7 et la tuyère 8 basculent également en sens inverse du fait que le moteur-fixe 4 est rendu solidaire du plateau d'extrémité 24 par la partie de la tuyère 8 voisine au col de tuyère 9. Grâce à ce fait et à la constitution de la structure de base 14B, le centre C de l'orifice d'éjection des gaz de la tuyère 10 peut, dans ces positions P₂ basculées dans la direction de déformation 13, rester au voisinage de l'axe de référence mₒ - mₒ, si ce n'est sur celui-ci. Le débattement de la tuyère 10 dans la direction de déformation 13 peut donc être faible.

Bien entendu, comme l'illustre la figure 8, les vérins 15 et16 peuvent agir simultanément pour conférer au moteur-fusée 4 des positions P₃, basculées, à la fois, dans la direction de déformation 12 et dans la direction de déformation 13.

## Revendications

1. Système de moteur-fusée orientable pour véhicule aérien, ledit moteur-fusée (4) comportant une chambre de combustion (7) et une tuyère (8) reliées par un col de ladite tuyère (9) et ledit système permettant d'orienter ledit moteur-fusée (4) par rapport à une position de référence (Pₒ) définissant un axe de référence (mₒ - mₒ) qui, lorsque ledit moteur-fusée (4) est dans ladite position de référence (Pₒ), est orthogonal à l'orifice (10) d'éjection des gaz de la tuyère et passe par le centre (C) dudit orifice (10) d'éjection des gaz,
**caractérisé en ce qu'**il comporte des moyens de basculement (11) :
• desquels ledit moteur-fusée (4) est rendu solidaire par la partie de ladite tuyère (8) voisine dudit col de tuyère (9), et
• qui sont aptes à faire basculer en sens opposés ladite tuyère (8) et ladite chambre de combustion (7) et qui sont tels que ledit moteur-fusée prend, par rapport à ladite position de référence (Pₒ), des positions basculées (P₁ P₂, P₃) dans lesquelles le centre (C) de dudit orifice (10) d'éjection des gaz de la tuyère (8) se trouve sur ledit axe de référence (mₒ - mₒ),
lesdits moyens de basculement (11) comportant une structure de support (14A) creuse de forme tronc-pyramidale :
• qui est déformable dans les deux sens (12.1, 12.2) d'une première direction de déformation (12), sous l'action de premiers moyens d'actionnement (15),
• qui porte ledit moteur-fusée (4) par sa petite base (24), et
• à l'intérieur de laquelle est logée ladite chambre de combustion (7).

2. Système selon la revendication 1,
**caractérisé en ce que** ladite structure de support déformable creuse (14A) est formée par un treillis de barres articulées (20).

3. Système selon l'une des revendications 1 ou 2,
**caractérisé en ce que** lesdits moyens de basculement (11) comportent une structure de base creuse (14B), de forme tronc-pyramidale :
• qui est montée par sa grande base (22) sur ledit véhicule,
• qui est déformable dans les deux sens (13.1 et 13.2) d'une seconde direction de déformation (13) orthogonale à ladite première direction de déformation (12), sous l'action de seconds moyens d'actionnement (16), et
• qui porte ladite structure de support déformable creuse (14A) par sa petite base (17).

4. Système selon la revendication 3,
**caractérisé en ce que** ladite structure de base déformable creuse (14B) est formée par un treillis de barres articulées (18).

5. Système selon les revendications 2 et 4,
**caractérisé en ce que** les treillis de ladite structure de base (14B) et de ladite structure de support (14A) sont superposés pour former une ossature tronc-pyramidale creuse (14) pour lesdits moyens de basculement (11).

6. Système selon la revendication 5,
**caractérisé en ce que** lesdits moyens de basculement (11) comportent un cadre intermédiaire (17) pour l'assemblage des treillis de ladite structure de base (14B) et de ladite structure de support (14A), cadre intermédiaire (17) sur lequel :
• les barres (20) de ladite structure de support (14A) sont articulées autour de premiers axes de rotation (21) orthogonaux à ladite première direction de déformation (12), et
• les barres (18) de ladite structure de base (14B) sont articulées autour de seconds axes de rotation (19) orthogonaux à ladite seconde direction de déformation (13).

7. Système selon la revendication 6,
**caractérisé en ce que** lesdits premiers moyens d'actionnement (15) pour la déformation de ladite structure de support prennent appui sur ledit cadre intermédiaire (17).

8. Système selon l'une des revendications 4 à 7,
**caractérisé en ce que** lesdits moyens de basculement (11) comportent un cadre de base (22) pour l'assemblage du treillis de ladite structure de base (14B) sur le véhicule aérien, les barres du treillis (18) de ladite structure de base étant articulées sur ledit cadre de base (22) autour de seconds axes de rotation (23) orthogonaux à ladite seconde direction de déformation.

9. Système selon la revendication 8,
**caractérisé en ce que** lesdits seconds moyens d'actionnement (16) pour la déformation de ladite structure de base (14B) prennent appui sur ledit cadre de base (22).

10. Système selon l'une des revendications 3 à 8,
**caractérisé en ce que** lesdits moyens de basculement (11) comportent un plateau d'extrémité (24) pour la fixation dudit moteur-fusée (4) sur ladite structure de support (4A), les barres (20) de ladite structure de support étant articulées sur ledit plateau d'extrémité (24) autour de premiers axes de rotation (25) orthogonaux à ladite première direction de déformation.

11. Véhicule aérien,
**caractérisé en ce qu'**il comporte un système de moteur-fusée orientable tel que celui spécifié sous l'une des revendications 1 à 10.

## Claims

1. Orientable rocket motor system for an airborne vehicle, said rocket motor (4) comprising a combustion chamber (7) and a nozzle (8) connected by a neck (9) of said nozzle, and said system making it possible to orient said rocket motor (4) with respect to a reference position (Pₒ) defining a reference axis (mₒ - mₒ) which, when said rocket motor (4) is in said reference position (Pₒ), is orthogonal to the orifice (10) for ejecting gases from the nozzle and passes through the centre (C) of said gas-ejection orifice (10),
**characterised in that** it comprises tilting means (11):
• by which said rocket motor (4) is rigidly connected to said nozzle neck (9) by the adjacent part of said nozzle (8), and
• which are adapted to tilt said nozzle (8) and said combustion chamber (7) in opposite directions so that said rocket motor adopts, with respect to said reference position (Pₒ), tilted positions (P₁, P₂, P₃) in which the centre (C) of said orifice (10) for ejecting gases from the nozzle (8) is situated on said reference axis (mₒ - mₒ),
said tilting means (11) comprising a hollow base structure (14B), having a truncated pyramid shape:
• that is deformable in both directions (12,1, 12.2) of a first deformation direction (12), under the action of first actuation means (15),
• which carries said rocket motor (4) by the small base (24) thereof, and
• inside which said combustion chamber (7) is housed.

2. System according to claim 1, **characterised in that** said hollow déformable support structure (14A) is formed by a lattice of articulated bars (20).

3. System according to either claim 1 or claim 2, **characterised in that** said tilting means (11) comprise in addition a hollow base structure (148), having a truncated pyramid shape:
• that is mounted by the large base (22) thereof on said vehicle,
• that is deformable in both directions (13.1 and 13.2) of a second deformation direction (13) orthogonal to said first deformation direction (12), under the action of second actuation means (16), and
• that carries said hollow deformable support structure (14A) by the small base (17) thereof.

4. System according to claim 3, **characterised in that** said hollow deformable base structure (14B) is formed by a lattice of articulated bars (18).

5. System according claim 2 and claim 4, **characterised in that** the lattices of said base structure (14B) and of said support structure (14A) are placed one above the other in order to form a hollow truncated pyramid framework (14) for said tilting means (11).

6. System according to claim 5, **characterised in that** said tilting means (11) comprise an intermediate frame (17) for assembling the lattices of said base structure (14B) and of said support structure (14A), an intermediate frame (17) on which:
• the bars (20) of said support structure (14A) are articulated about first rotation axes (21) orthogonal to said first deformation direction (12), and
• the bars (18) of said base structure (14B) are articulated about second rotation axes (19) orthogonal to said second deformation direction (13).

7. System according to claim 6, **characterised in that** said first actuation means (15) for deforming said support structure bear on said intermediate frame (17).

8. System according to any of claims 4 to 7, **characterised in that** said tilting means (11) comprise a base frame (22) for assembling the lattice of said base structure (14B) on the airborne vehicle, the lattice bars (18) of said base structure being articulated on said base frame (22) about second rotation axes (23) orthogonal to said second deformation direction.

9. System according to claim 8, **characterised in that** said second actuation means (16) for deforming said base structure (14B) bear on said base frame (22).

10. System according to any of claims 3 to 8, **characterised in that** said tilting means (11) comprise an end plate (24) for attaching said rocket motor (4) to said support structure (4A), the bars (20) of said support structure being articulated on said end plate (24) about first rotation axes (25) orthogonal to said first deformation direction.

11. Airborne vehicle, **characterised in that** it comprises an orientable rocket motor system as specified in any of claims 1 to 10.

## Patentansprüche

1. Lenkbares Raketentriebwerksystem fur Luftfahrzeug, wobei das Raketentriebwerk (4) eine Brennkammer (7) und eine Düse (8) aufweist, die durch einen Hals der Düse (9) verbunden sind, und wobei das System ermoglicht, das Raketentriebwerk (4) relativ zu einer Referenzposition (P₀) auszurichten, die eine Referenzachse (m₀ - m₀) definiert, die, wenn das Raketentriebwerk (4) in der Referenzposition (P₀) ist, orthogonal zu der Gaseinspritzöffnung (10) der Düse ist und durch die Mitte (C) der Gaseinspritzöffnung (10) verläuft,
**dadurch gekennzeichnet, dass** sie Kippmittel (11) aufweist:
• mit denen das Raketentriebwerk (4) durch den Teil der Düse (8) fest verbunden ist, der zu dem Düsenhals (9) benachbart ist, und
• die geeignet sind, die Düse (8) und die Brennkammer (7) in entgegengesetzte Richtungen zu kippen, und die derart sind, dass das Raketentriebwerk relativ zu der Referenzposition (P₀) Kipppositionen (P₁, P₂, P₃) einnimmt, in denen sich die Mitte (C) der Gaseinspritzöffnung (10) der Düse (8) auf der Referenzachse (m₀ - m₀) befindet,
wobei die Kippmittel (11) eine pyramidenstumpfförmige hohle Stützstruktur (14A) aufweisen:
• die in die zwei Richtungen (12.1, 12.2) einer ersten Verformungsrichtung (12) unter der Wirkung von ersten Betätigungsmitteln (15) verformbar ist,
• die das Raketentriebwerk (4) durch ihre kleine Basis (24) trägt, und
• in deren Innerem die Brennkammer (7) angeordnet ist.

2. System nach dem Anspruch 1,
**dadurch gekennzeichnet, dass** die verformbare hohle Stützstruktur (14A) durch ein Gitterwerk von Gelenkstangen (20) gebildet ist.

3. System nach einem der Ansprüche 1 oder 2,
**dadurch gekennzeichnet, dass** die Kippmittel (11) eine pyramidenstumpfförmige hohle Basisstruktur (14B) aufweisen:
• die durch ihre große Basis (22) auf dem Fahrzeug befestigt ist,
• die in die zwei Richtungen (13.1 und 13.2) einer zweiten Verformungsrichtung (13), die zu der ersten Verformungsrichtung (12) orthogonal ist, unter der Wirkung von zweiten Betätigungsmitteln (16) verformbar ist, und
• die die verformbare hohle Stützstruktur (14A) durch ihre kleine Basis (17) trägt.

4. System nach dem Anspruch 3,
**dadurch gekennzeichnet, dass** die verformbare hohle Basisstruktur (14B) durch ein Gitterwerk von Gelenkstangen (18) gebildet ist.

5. System nach den Ansprüchen 2 und 4,
**dadurch gekennzeichnet, dass** die Gitterwerke der Basisstruktur (14B) und der Stutzstruktur (14A) übertagert sind, um ein hohles pyramidenstumpfförmiges Gerüst (14) für die Kippmittel (11) zu bilden.

6. System nach dem Anspruch 5,
**dadurch gekennzeichnet, dass** die Kippmittel (11) einen Zwischenrahmen (17) für das Zusammenbauen der Gitterwerke der Basisstruktur (14B) und der Stützstruktur (14A) aufweisen, Zwischenrahmen (17), an dem:
• die Stangen (20) der Stützstruktur (14A) um erste Drehachsen (21), die orthogonal zu der ersten Verformungsrichtung (12) sind, angelenkt sind, und
• die Stangen (18) der Basisstruktur (14B) um zweite Drehachsen (19), die orthogonal zu der zweiten Verformungsrichtung (13) sind, angelenkt sind.

7. System nach dem Anspruch 6,
**dadurch gekennzeichnet, dass** sich die ersten Betätigungsmittel (15) für das Verformen der Stützstruktur auf dem Zwischenrahmen (17) abstützen.

8. System nach einem der Ansprüche 4 bis 7,
**dadurch gekennzeichnet, dass** die Kippmittel (11) einen Basisrahmen (22) für die Montage des Gitterwerks der Basisstruktur (14B) an dem Luftfahrzeug aufweisen, wobei die Stangen des Gitterwerks (18) der Basisstruktur auf dem Basisrahmen (22) um zweite Drehachsen (23), die orthogonal zu der zweiten Verformungsrichtung sind, angelenkt sind.

9. System nach dem Anspruch 8,
**dadurch gekennzeichnet, dass** sich die zweiten Betätigungsmittel (16) für das Verformen der Basisstruktur (14B) auf dem Basisrahmen (22) abstützen.

10. System nach einem der Ansprüche 3 bis 8,
**dadurch gekennzeichnet, dass** die Kippmittel (11) eine Endplatte (24) für das Befestigen des Raketentriebwerks (4) auf der Stützstruktur (4A) aufweisen, wobei die Stangen (20) der Stützstruktur auf der Endplatte (24) um erste Drehachsen (25), die orthogonal zu der ersten Verformungsrichtung sind, angelenkt sind.

11. Luftfahrzeug,
**dadurch gekennzeichnet, dass** es ein lenkbares Raketentriebwerksystem wie jenes, das in einem der Ansprüche 1 bis 10 angegeben ist, aufweist.
